# EUROPEAN PATENT SPECIFICATION

(11) **EP 0 879 138 B1**
(45) Date of publication and mention of the grant of the patent: **05.04.2000**
(21) Application number: 96916112.4
(22) Date of filing: 13.05.1996
(51) Int. Cl.: B29D 11/00, G02B 6/16, G02B 1/04

(54) **METHOD OF MAKING GRADED INDEX POLYMERIC OPTICAL FIBRES**
VERFAHREN ZUR HERSTELLUNG VON POLYMEREN OPTISCHEN FASERN MIT GRADUIERTEM BRECHUNGSINDEX
PROCEDE DE FABRICATION DE FIBRES OPTIQUES POLYMERES A GRADIENT D'INDICE

(43) Date of publication of application: 25.11.1998
(73) Proprietor: Akzo Nobel N.V., 6824 BM Arnhem (NL)
(72) Inventor: JUIJN, Johannes, Anthonij, NL-6883 KE Velp (NL); KRINS, Bastiaan, NL-6932 LP Westervoort (NL); OVERDIEP, Wigle, Sjoerd, NL-6996 DG Drempt (NL); VAN ANDEL, Eleonoor, NL-7548 RB Enschede (NL)
(74) Representative: Schalkwijk, Pieter Cornelis
(86) International application number: EP9602123
(87) International publication number: WO9636478

(56) References cited:
- EP-A- 0 496 893
- EP-A- 0 615 141
- FR-A- 2 682 969
- GB-A- 1 439 627
- DATABASE WPI Derwent Publications Ltd., London, GB; AN 89-353291 XP002013893 & JP,A,01 265 207 (MITSUBISHI RAYON KK.) , 23 October 1989

## Description

### (a) Field of the Invention

The invention pertains to a method of making a graded index polymer optical fiber according to the precharacterising part of claim 1.

Graded index polymer optical fibres can be used for broadband optical transmission. In view of the increasing trend to replace electric wire transmission with optical fibre transmission, it will become necessary to provide homes and offices with optical fibre connections ("fibre to the home"). Since broadband optical fibre connections require too precise an alignment to be handled without professional skill and apparatus, interconnection means are needed in order to magnify the optical channel to home and office handling size. For this purpose graded index polymer optical fibres may be highly suitable, as they provide a relatively large bandwidth, and may have a relatively large diameter.

### (b) Background Art

Graded index polymer optical fibres, and methods of making them, are known.

Thus, a method comprising a bicomponent spinning process employing a core spinning mass and a sheath spinning mass is disclosed in Japanese Patent Application Laid-Open No. 94/186,441. A refractive index distribution type plastic optical transmission body is produced by discharging a polymer monomer mixture determined by a 50-90% conversion from the outside discharge hole of a nozzle plate with a double concentric discharge hole, while simultaneously discharging a monomer mixture or a polymer monomer mixture of conversion 50% or less from the inside discharge hole. The latter mixture contains a non-polymerizable colourless transparent compound with a high refractive index, such as benzyl butyl phthalate. Said mixtures are discharged to produce a core-sheath composite rod. The high refractive index compound is diffused from the mixture in the inner layer (the core mixture) into the mixture in the outer layer (the sheath mixture). Further polymerization of the discharged rod results in an optical transmission body with a refractive index distribution which continuously decreases from the centre toward the periphery. To prepare an optical fibre from the rod, the rod is drawn to the desired fibre diameter.

A disadvantage of this method is its multi-stage character. The separate steps of discharging a rod, post-polymerizing the rod, and drawing it to a fibre, make for an inherently not fully economical process. Also, the step of forming the graded index rod is slow. It is desired to provide a process which yields a fibre directly, i.e., without first having to form a rod to be drawn. It is further desired that such a process be a one-step, preferably continuous process.

Apart from its objectionable multi-stage character, the known process has a further drawback in that the non-polymerizable high refractive index compound, which is miscible with the sheath and core polymers, remains in the system as a plasticizer. Further, the presence of such a low-molecular weight compound means that the eventual optical fibre may be prone to temperature induced instability as a result of further diffusion of the low-molecular weight compound. It is therefore desired to provide a graded index polymeric optical fibre where the refractive index distribution is fixed in the polymer.

Methods of providing polymeric optical fibres where the refractive index distribution in the eventual fibre is not determined by the presence of a low-molecular weight compound are known.

In this respect Japanese Patent Application Laid-Open No. 90/ 33,104 is referred to. Disclosed is a method of making a graded index polymer optical fibre, again by means of bicomponent spinning of a core and a sheath spinning mass. The sheath is spun from a mixture of a polymer, e.g, poly(methyl methacrylate), and a monomer, e.g., methyl methacrylate. The core is spun from a high refractive index monomer, e.g., phenyl methacrylate. After having been discharged through a bicomponent spinning nozzle, the spun core-sheath filament is passed through a heated tube to effect diffusion and then subjected to UV irradiation to effect photopolymerization. Thus, a core-sheath optical fibre is formed in which, due to diffusion of the methyl methacrylate and phenyl methacrylate monomers a refractive index distribution is attained. The index distribution is fixed in a polymeric structure as a result of the polymerization.

This process is not carried out at the desired rate either, typical residence times in the heated tube and during irradiation being about three minutes each. Further, the process has a drawback in that the core does not contribute to the filament forming. In order to have a stable spinning process in which a filament of sufficient sturdiness is formed, it is a prerequisite that the polymer concentration in the sheath spinning mass be sufficiently high, a typical value being 60 wt.%. Too high a polymer concentration may adversely affect the diffusion rate, and thus may make for a too slow process.

In Japanese Patent Application Laid-Open No. 91/ 42,604 a different method is disclosed. Here, a graded index polymer optical fibre is made by bicomponent spinning, the core material comprising a polymer-monomer mixture and the sheath material being a low refractive index polymer, e.g., poly(tetrafluoropropyl methacrylate). This method also requires a too long process time, again involving a heated tube and UV irradiation.

For carrying out the JP 90/ 33,104 and JP 91/ 42,604 methods, a bicomponent spinning apparatus is used in which the spinning masses are discharged from the bottom to the top. For the sake of practicality it is desired to provide a process for making graded index polymer optical fibres in which the introduction of the refractive index distribution is sufficiently fast to allow normal spinning (in which a spinning mass is discharged from the top to the bottom of the spinning apparatus).

Several other methods of making graded index polymer optical fibres have been disclosed in the art. Thus, JP 77/5857 pertains to a method in which a rod is formed by incompletely polymerizing a high refractive index monomer (diallyl phthalate). A monomer having a lower refractive index (methyl methacrylate) is diffused into the rod under simultaneous polymerization. A similar method is disclosed in JP 81/37521. A partially polymerized high refractive index polymer is placed in a monomer which is in the gaseous phase, and this then diffuses into the polymer with further polymerization taking place.

In JP 79/30301 two different monomers are heterogeneously copolymerized so as to form a gradient in the monomer composition. In JP 86/130904 a mixture of monomers having different refractive indices is subjected to curing from the outside. The monomer mixture on the inside becomes enriched with the higher refractive index monomer.

In JP-A-01-265207 the spinning of a co-axial multilayer fiber from two types of spinning liquids containing a polymer, vinyl monomer, and a photosensitizer, and having a different refractive index is disclosed. However, it is not disclosed that the monomer in the core spinning mass has a higher refractive index than the monomer in the sheath spinning mass.

In EP-A-0,615,141 a method of manufacturing plastic optical transmission bodies have been described wherein a transparent polymer melt and a transparent diffusible material having a refractive index different from that of the transparent polymer are coaxially extruded. This method does not make use of two different monomers, one of which is in the core spinning mass and has a higher refractive index than the other monomer which is in the sheath spinning mass.

In EP 208 159 a polymer monomer mixture is extruded, the monomer being volatile and having a relatively high refractive index. Vaporization from the outside leads to the core having more high refractive index monomer than the sheath.

In EP 496 893 a poly(methyl methacrylate) tube is made and filled with a monomer mixture of methyl methacrylate and benzyl methacrylate. A graded index rod is formed by rotating the tube (about 20 hours) under polymerization conditions. The rod is drawn to a graded index polymer optical fibre. Also in EP 497 984 a polymeric tube is made and filled with monomer. A rod having a graded index of refraction results from diffusion. A graded index polymer optical fibre is drawn from the rod.

All of these background art disclosures are unattractive, discontinuous methods which do not satisfy the aforementioned desires, and in which spinning speeds of only below 1 m/min are attained.

The object of the invention is to provide an efficient method of making a graded index polymer optical fibre which can be carried out as a continuous bicomponent spinning process that is faster than the prior art processes ((preferably even up to 10 m/min or faster).

### (c) Disclosure of the Invention

### 1. Summary

The above object is attained according to the invention by a method of making a graded index polymer optical fibre comprising a bicomponent spinning process employing a core spinning mass and a sheath spinning mass, the core spinning mass and the sheath spinning mass comprising a polymer and a monomer, wherein the monomer in the core spinning mass has a higher refractive index than the monomer in the sheath spinning mass.

Particular embodiments of the invention are the subject of the dependent claims.

### 2. Detailed Description

Bicomponent spinning processes are known to the person of ordinary skill in the art. A description of the basic principles can, e.g., be found in D.R. Paul and S. Newman, Polymer Blends, Chapter 16: Fibers from polymer blends, pages 176-177. In these processes generally the core and sheath spinning masses are extruded simultaneously through a a spinneret, the core-sheath configuration being attained either by means of the shape of the spinneret (e.g. having orifices with two concentric holes) or by means of a tube through which the core spinning mass is extruded, placed just before a regular spinneret.

In the process of the invention, the refractive index distribution develops from a clear stepwise distribution just after the spinning masses have passed the spinneret to the desired gradual decrease from the centre of the core to the periphery of the sheath. For, just after passage of the spinning points (which, in the preferred top to bottom spinning process will be just underneath the spinneret), the refractive index distribution is determined by the refractive index difference between the two spinning masses. This starting difference of the refractive indices of the core and sheath spinning masses will generally be of the order of 0.01 to 0.10. It is preferred for this difference to be relatively large, as this provides the largest numerical aperture, and the greatest degree of freedom in determining the eventual steepness of the distribution, while retaining an adequate process rate.

The extrusion of both spinning masses leads to the continuous formation of a thread (in this case an optical fibre). At a fixed point of the formed thread, the diffusion of the higher and lower refractive index monomers will lead to the core becoming richer in lower index monomer and poorer in higher index monomer, while the reverse holds for the sheath. Thus, upon further propagation of the extruded filaments, what was the stepwise distribution just after the spinning points more and more becomes a gradual distribution. Should the diffusion process be allowed to proceed freely, then eventually the refractive index difference between core and sheath would be flattened out.

In order to have the desired refractive index distribution become fixed in the polymeric fibre, the monomers are made to polymerize respectively copolymerize into the polymers. To this end, it is desired that both the core and the sheath spinning mass comprise a polymerization initiator, preferably a UV initiator. Where polymerization has taken place, the diffusion of monomers is inhibited. In practical circumstances there may be a difference in curing over the diameter of the fibre. For the man skilled in the art it is common general knowledge how to avoid this by the proper combination of type and concentration of initiator. With proper selection of the spinning rate and the UV irradiation duration, the process can be carried out in such a manner that completion of the polymerization coincides with the point in time at which the desired refractive index distribution has been achieved.

For a given system of polymers, monomers, UV initiator, and wavelength of the irradiation, the person of ordinary skill in the art can thus determine the conditions for making graded index polymer optical fibres without undue experimentation. A further disclosure of the variations that can be made within the scope of the invention follows hereinafter.

An important variable is the polymer concentration in the spinning masses. If the core and sheath spinning masses have a polymer concentration which is sufficiently low, the rate of diffusion of both the high refractive index monomer and the low refractive index monomer will be high enough not to limit the spinning process rate.

Surprisingly, with the method of the invention it has been found possible to obtain a process in which diffusion takes place at such a high rate that the graded index polymer optical fibres can be produced in a continuous bicomponent spinning process at a rate of approximately 10 m/min. To this end, the core and sheath spinning masses are solutions of the polymer in the monomer having a polymer concentration of from 10 to 50 % by weight. A high rate of diffusion being most advantageous, it is preferred that the polymer concentration be within a range of from 10 to 30 wt%.

In both the core and the sheath spinning mass the combination of a polymer and a monomer not only leads to the unexpectedly high process rates that are attainable, it also has the crucial advantage that, even at high spinning rates, filaments of sufficient sturdiness can be formed. To this end, the continuous formation of endless bicomponent filaments is best performed with the core and sheath polymers each having a molecular weight higher than 100,000. For the sake of obtaining high diffusion rates and high spinning speeds, which require a low polymer concentration, it is preferred for the polymers to each have a molecular weight higher than 500,000.

In order to obtain a graded index polymer optical fibre having optimum properties in respect of optical transmission, the core and sheath polymers are desired to be chemically identical. More preferably, they will also be the same physically. Apart from positively affecting the final properties of the fibre, this also makes for a surprisingly simple and convenient process. For, with the core and sheath polymers being the same, the refractive index differences in the core and sheath spinning masses (and thus in the final graded index polymer optical fibre) are determined by the monomer selection only.

In that case, it is preferred to have the refractive index difference between the high index monomer comprised in the core and the low index monomer comprised in the sheath within the range indicated above. Preferably, this difference is of from 0.01 to 0.1.

Within the framework of this description, the refractive index of a monomer is considered to be proportional to the refractive index of the corresponding homopolymer. The refractive index of the interpolymers that result from the copolymerization of the high and low index monomers in combination with the original polymers is proportionally related to the amount of each monomer incorporated into such interpolymers.

It is further preferred for the monomer in one of the two spinning masses to be corresponding to the polymer comprised in the same spinning mass. While this does not exclude that in each of the spinning masses the monomer and the polymer correspond, and that the core and the sheath thus comprise a different polymer, it is highly preferred, in order to avoid a stepwise refractive index distribution, that the polymers be the same, and for either the core spinning mass or the sheath spinning mass to contain the corresponding monomer.

For reasons of processability, cheap high molecular weight availability and good optical properties, it is preferred that the polymer in both the core and the sheath spinning masses be poly(methyl methacrylate). In that case it is further preferred that the sheath monomer be methyl methacrylate and the core monomer have a higher refractive index than methyl methacrylate. The monomer in that case preferably is an acrylic monomer. Examples of higher index acrylic monomers are benzyl methacrylate, phenyl methacrylate, 1-phenylethyl methacrylate, 2-phenylethyl methacrylate, furfuryl methacrylate, 2-chloroethyl acrylate. Benzyl methacrylate and phenyl methacrylate are preferred most.

It should be noted that suitable optical polymers and corresponding or analogous higher and lower refractive index monomers are known to the person of ordinary skill in the art. Thus graded index materials and components have been described by Y. Koike in Polymers for lightwave and integrated optics, L.A. Hornak ed., Chapter 3, pp. 71-104.

If it is desired to make graded index polymer optical fibres for use in the near-infrared region (near-IR), optical attenuation caused by the absorption of light by overtones of the vibrational frequencies of hydrogen atoms-containing bonds, especially 0-H, N-H, C-H, should be avoided as much as possible. This can be achieved by replacing the hydrogen atoms with heavier elements. Also in other wavelength regions, the replacement inpolymeric light guides, of hydrogen atoms by heavier elements may bring about a favourable widening of the frequency ranges in which absorption minima are to be found.

Mostly, however, the graded index polymer optical fibres of the invention will be used with visible light. This has advantages in the case of optical fibre connections being made in-house. Further, the preferred material, poly(methyl methacrylate) is mostly used with visible light, as it has an absorption minimum in that region.

As hydrogen replacing elements at any rate preference is given to the fluorine and/or chlorine, since these may be used to further tune the refractive index. F and Cl have contrasting individual effects: while fluorine may cause a sharp lowering of the refractive index, chlorine causes it to become higher.

For further elucidation, and not limitation, here follows a description of the best mode of the invention, an Example, and a Comparative Example.

Two gels are processed to a core-sheath fibre in a bicomponent spinning process. The core gel (core spinning mass) consists of high molecular-weight poly(methyl methacrylate) - PMMA - dissolved in a methacrylate monomer with a higher refractive index than MMA (methyl methacrylate), preferably benzyl methacrylate. The sheath spinning mass is a gel of PMMA in MMA.

The PMMA polymers preferably used, and the minimum gel concentrations required to spin a thread of sufficient sturdiness are summarized in Table I

**TABLE I**

| Type of PMMA | Mz | Mw | Mn | Concentration |
|---|---|---|---|---|
| Röhm 7N | 152000 | 98000 | 50000 | 67% |
| Röhm Plex®6770F | 2222000 | 1214000 | 494000 | 20% |
| Elvacite®2008 | 64500 | 39500 | 17500 | 60% |
| Elvacite®2010 | 155000 | 94000 | 42000 | 55% |
| Elvacite®2021 | 225000 | 130000 | 48500 | 45% |
| Elvacite®2041 | 1112500 | 538500 | 177000 | 28% |

It is preferred that in the core polymers be employed that have the highest possible molecular weight. The molecular weight of the polymer is preferably lower than that in the core, while it is still more preferred to employ a mixture of higher and lower molecular weight polymers in the core.

The spinning masses (gels) are prepared by dissolving the polymer(s) in the respective monomers at 80°C with stirring. In order to avoid thermal curing, it is preferred to add an inhibitor (e.g. benzoquinone) to the spinning masses. An initiator (e.g. Irgacure®369) is added in order to be able to conduct UV curing.

The spinning equipment is provided with two plunger pumps, one for the core, and one for the sheath. The pumps are filled with the spinning masses by pouring, after which the spinning equipment is put together. From the plunger pumps, two conduits lead to a bicomponent spinneret, through which a core-sheath fibre is formed. By tailoring the discharge of the plunger pumps, the composition of the fibre in terms of the volume ratio between sheath and core can be chosen as desired (e.g. of from 20/80 to 80/20). In commercial practice, continuous dosing systems will be preferred to the plunger pumps.

Upon spinning, the formed thread is surrounded by a glass tube, the atmosphere in which is inert (e.g. nitrogen flow), in order to exclude oxygen (which has an adverse effect on UV curing). After a predetermined distance (over which diffusing of monomers takes place) a curing section is provided comprising a number of UV sources, the radiation of which preferably is of from 300 to 450 nm. Employed is, e.g., Philips Cleo Performance (313-370 nm). Other suitable lamps include Philips color 03 (340-400 nm), 05 (370 nm), 08 (360-370 nm), and 10 (340-400 nm). Preferred emission is of from 350 to 400 nm, as these wavelengths have a favourable penetration depth, and suitable initiators are available.

It should be noted that the ideal situation is that in a first stage diffusion takes place in order to form the desired refractive index profile, and in a second stage this profile is fixed by UV-curing. In practice, however, these stages will generally overlap, since the rate of curing is of the same order of magnitude (seconds) as the rate of diffusion. The man skilled in the art will be able to determine, without undue experimentation, and using his due skill with regard to curing over relatively large distances (thick layers, large diameters, i.e. mm scale rather than thin films of nm scale), the point in time at which curing should commence so as to obtain the desired profile. In this respect, J.Rad.Curing, 1980, 7(2), p20 is referred to, as well as J.G. Woods, "Radiation curable adhesives", in: Radiation Curing: Science and Technolog (S.P. Pappas, ed.), Plenum Publishers, New York, 1992, Chapter 9.

### EXAMPLE

A solution of PMMA (Trade name Elvacite 2041 of ICI, M_{W} = 540.000 as measured by HPLC) in MMA with a concentration of 28 wt.% was made. The solution contained 100 ppm benzoquinone as a thermal inhibitor and 0.1 wt.% (±)-2-benzyl-2-(dimethylamino)-4'-morpholinobutyrophenone (Irgacure 369) as an UV-initiator.
In the same way a second solution of PMMA (Elvacite 2041) in BzMA was made with also a concentration of 28.wt.%.
In a spinning experiment two high pressure syringe pumps were filled with these solutions. The two pumps are connected to a bicomponent spinneret. The spinning temperature was 75°C. A bicomponent fiber with the solution with MMA in the sheath, and the solution with BzMA in the core, is spun through a capillary of 1 mm in diameter into a nitrogen atmosphere. The extrusion speed was 0.6 m/min, the volume ratio of skin to core was 50:50. The take up speed was 1.2 m/min.
Below the spinneret a diffusion section was created with a length of 50 cm, followed by a curing section with a length of 150 cm. The draw down takes place in the diffusion section, so the residence time in the curing section was 75 sec. The curing sections contains 12 UV tubes, in a circle around the spinning filament, with a radiation between 313 and 370 nm (Philips Cleo Performance).
Light transmittance of the fibre produced could easily be confirmed with a light source.

### COMPARATIVE EXAMPLE

In a comparative spinning experiment the same procedure was followed, however using PMMA with a lower molecular weight, viz. Elvacite 2021 with M_{W} = 130.000 as measured by HPLC. No thread formation was seen, the solution dripped out off the spinneret.

## Claims

1. A method of making a graded index polymer optical fiber comprising a bicomponent spinning process employing a core spinning mass and a sheath spinning mass, the core spinning mass and the sheath spinning mass comprising a polymer and a monomer, characterized in that the monomer in the core spinning mass has a higher refractive index than the monomer in the sheath spinning mass.

2. A method according to claim 1, characterized in that the spinning masses comprise a UV initiator, and spinning is followed by UV curing.

3. A method according to claim 2, characterized in that UV curing is effected by irradiation at a wavelength of from 350 to 400 nm.

4. A method according to any one of the preceding claims, characterized in that the core and sheath spinning masses are solutions of the polymer in the monomer having a polymer concentration of from 10 to 50 % by weight.

5. A method according to any one of the preceding claims, characterized in that the core and sheath polymers each have a molecular weight higher than 100,000.

6. A method according to claim 5, characterized in that the polymers each have a molecular weight higher than 500,000.

7. A method according to any one of the preceding claims, characterized in that the sheath and core polymers are chemically identical.

8. A method according to claim 7, characterized in that the sheath and core polymers both are poly-methyl-methacrylate.

9. A method according to claim 8, characterized in that the sheath monomer is methyl-methacrylate and the core monomer is benzyl-methacrylate.

## Patentansprüche

1. Verfahren zur Herstellung einer polymeren optischen Gradientenfaser mit Hilfe eines Zweikomponenten-Spinnverfahrens, bei welchem eine Kernspinnmasse und eine Mantelspinnmasse verwendet werden, wobei die Kernspinnmasse und die Mantelspinnmasse ein Polymer und ein Monomer enthalten, dadurch gekennzeichnet, dass das Monomer in der Kernspinnmasse einen höheren Brechungsindex hat, als das Monomer in der Mantelspinnmasse.

2. Verfahren nach Anspruch 1, dadurch gekennzeichnet, dass die Spinnmassen einen UV-Initiator enthalten und dass nach dem Spinnen eine UV-Vernetzung folgt.

3. Verfahren nach Anspruch 2, dadurch gekennzeichnet, dass die UV-Vernetzung durch Bestrahlen mit einer Wellenlänge von 350 bis 400 nm bewirkt wird.

4. Verfahren nach einem der vorangehenden Ansprüche, dadurch gekennzeichnet, dass die Kern- und Mantelspinnmassen Lösungen des Polymers in dem Monomer sind und eine Polymerkonzentration von 10 bis 50 Gew.% haben.

5. Verfahren nach einem der vorangehenden Ansprüche, dadurch gekennzeichnet, dass die Kern- und Mantelpolymeren jeweils ein Molekulargewicht von über 100,000 haben.

6. Verfahren nach Anspruch 5, dadurch gekennzeichnet, dass die Polymeren je ein Molekulargewicht von über 500,000 haben.

7. Verfahren nach einem der vorangehenden Ansprüche, dadurch gekennzeichnet, dass die Mantel- und Kernpolymeren chemisch identisch sind.

8. Verfahren nach Anspruch 7, dadurch gekennzeichnet, dass sowohl die Mantel- als auch die Kernpolymeren Poly-methylmethacrylat sind.

9. Verfahren nach Anspruch 8, dadurch gekennzeichnet, dass das Mantelmonomer Methylmethacrylat und das Kernmonomer Benzyl-methacrylat ist.

## Revendications

1. Un procédé de fabrication d'une fibre optique polymère à gradient d'indice comprenant un procédé de filage à deux composants employant une masse de filage du coeur et une masse de filage de la gaine, la masse de filage du coeur et la masse de filage de la gaine comprenant un polymère et un monomère, caractérisée en ce que le monomère dans la masse de filage du coeur possède un indice de réfraction supérieur à celui du monomère dans le masse de filage de la gaine.

2. Un procédé selon la revendication 1, caractérisée en ce que les masses de filage comprennent un initiateur UV, et en ce que filage est suivi d'une vulcanisation aux UV.

3. Un procédé selon la revendication 2, caractérisée en ce que la vulcanisation aux UV est effectué par irradiation à une longueur d'onde comprise entre 350 et 400 nm.

4. Un procédé selon l'une quelconque des revendications précédentes, caractérisée en ce que les masses de filage du coeur et de la gaine sont des solutions du polymère dans le monomère ayant une concentration de polymère comprise entre 10 et 50 % en poids.

5. Un procédé selon l'une quelconque des revendications précédentes, caractérisée en ce que les polymères du coeur et de la gaine ont chacun une masse moléculaire supérieure à 100 000.

6. Un procédé selon la revendication 5, caractérisée en ce que les polymères ont chacun une masse moléculaire supérieure à 500 000.

7. Un procédé selon l'une quelconque des revendications précédentes, caractérisée en ce que les polymères de la gaine et du coeur sont chimiquement identiques.

8. Un procédé selon la revendication 7, caractérisée en ce que les polymères de la gaine et du coeur sont tous deux du poly(méthacrylate de méthyle).

9. Un procédé selon la revendication 8, caractérisée en ce que le monomère de la gaine est du méthacrylate de méthyle et le monomère du coeur est du méthacrylate de benzyle.
